(19)

**Europäisches Patentamt**

**European Patent Office**

**Office européen des brevets**

(11) **EP 4 717 896 A1**

(12) **EUROPEAN PATENT APPLICATION**

(43) Date of publication:
01.04.2026 Bulletin 2026/14

(21) Application number: 25191167.3

(22) Date of filing: 23.07.2025

(51) International Patent Classification (IPC):
**F02C 7/052** (2006.01)

(52) Cooperative Patent Classification (CPC):
**F02C 7/052;** F05D 2260/607; F05D 2260/80;
F05D 2270/11; F05D 2270/3015

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **25.09.2024 US 202418895620**

(71) Applicant: **Textron Innovations Inc.
Providence, Rhode Island 02903 (US)**

(72) Inventors:
- **Parsons, Thomas Dewey
  Fort Worth, 76101 (US)**
- **Steinert, Alan Hisashi
  Fort Worth, 76101 (US)**

(74) Representative: **Barker Brettell LLP
100 Hagley Road
Edgbaston
Birmingham B16 8QQ (GB)**

(54) **REAL-TIME ENGINE INLET BARRIER FILTER CONDITION MONITOR**

(57)    An aircraft (12) includes a turboshaft engine (14) for powering the aircraft (12); an inlet barrier filter, IBF, (16) for filtering air at an inlet (26) through which the turboshaft engine (14) draws inlet air; a differential pressure transducer (30) for measuring a differential pressure across the IBF (16) during operation of the aircraft (12); and a flight control computer system configured to, during operation of the aircraft (12), periodically calculate a restriction of an airflow through the IBF (16), periodically determine a rate of change of the restriction of the airflow, compare the rate of change to a threshold rate, and provide an alert to a pilot of the aircraft (12) when the determined rate of change exceeds the threshold rate.

FIG. 1

EP 4 717 896 A1

## Description

TECHNICAL FIELD

This disclosure relates in general to the field of aircraft and, more particularly, though not exclusively, to a real-time engine inlet barrier filter condition monitor for such aircraft.

BACKGROUND

Turboshaft engines are widely used as power plants in all types of vehicles including aircraft, land-based vehicles, and ships and boats. Such engines may also be used in auxiliary power units and other stationary equipment. One particular aircraft application is to provide power systems for rotorcraft, such as helicopters. Turboshaft engines compress inlet air in a compressor, which air is then mixed with fuel and ignited to drive a compressor turbine. The heated, expanding air-fuel mixture drives an aerodynamically-coupled "power" turbine that is connected to an output shaft called a power shaft that may be connected through a transmission apparatus to the driven element of a drive train or a propeller. It is a characteristic of turboshaft engines that the power turbine is not mechanically connected to the inlet compressor or compressor turbine. This design allows the compressor and compressor turbine (often called the gas generator) to rotate at different speeds than the power turbine. It also can eliminate the need for transmissions and clutches in some applications, thereby simplifying the drive train of the vehicle.

To prevent damage to the engine, an expensive assembly of substantial precision in its construction, the inlet air admitted to the engine is often filtered to ensure the inlet air is free of debris that could be harmful to the engine; however, as the filter performs its function, to remove debris from the inlet air stream, the filter becomes clogged, which increases the pressure drop across the filter. The increase in pressure drop decreases the available shaft power and increases fuel consumption. In the case of a rotorcraft powered by a turboshaft engine, the pressure drop due to filter contamination can cause a reduction in available shaft power such that published aircraft "flight manual performance" (FMP) can no longer be achieved.

In a typical example of a prior art rotorcraft, the condition of the engine air inlet barrier filter is subject to inspection based on a message or data displayed by a crew alerting system (CAS) located in the cockpit of the rotorcraft. The CAS may display a message and/or provide an indication that maintenance of the inlet barrier filter may be required based on the output of a transducer positioned in the air flow inlet to the engine. The transducer may be a switch that changes state in response to the output of a differential pressure (pressure drop) sensor.

While the change of state of the switch can indicate a threshold that may correspond to the need to clean or replace a filter element, the setting of the threshold may be a compromise that is not well-suited to actual operating conditions of the rotorcraft in a given application. For example, setting the threshold at higher levels of differential pressure (dP) that are equivalent to higher airflows associated with maximum take-off power may not indicate a need for filter maintenance as soon as it is needed based on the actual continuous uses of the rotorcraft. On the other hand, with a fixed threshold responsive to a single change of state of the transducer switch, the CAS may indicate a premature need to service the inlet filter if the threshold is set at too low a level. What is needed is a system for indicating the need for inlet barrier filter maintenance that more closely corresponds with continuous use rather than one example of a peak load use.

BRIEF DESCRIPTION OF THE DRAWINGS

To provide a more complete understanding of the present disclosure and features and advantages thereof, reference is made to the following description, taken in conjunction with the accompanying figures, in which like reference numerals represent like elements:

FIG. 1 illustrates a rotorcraft equipped with a turboshaft engine and an inlet barrier filter according to features of embodiments described herein;
FIG. 2 illustrates a flow diagram showing example operations performed in connection with a real-time engine inlet barrier filter condition monitor according to features of embodiments described herein;
FIG. 3 illustrates a graph relating differential pressure to mass inlet air flow through an inlet barrier filter such as that used in the rotorcraft shown in FIG. 1;
FIG. 4 illustrates a portion of the rotorcraft shown in FIG. 1;
FIG. 5 illustrates an instrument panel such as may be deployed in the rotorcraft shown in FIG. 1;
FIG. 6 illustrates a flow diagram showing additional example operations performed in connection with a real-time engine inlet barrier filter condition monitor according to features of embodiments described herein;
FIG. 7 illustrates extrapolation of the rate of change of an engine inlet barrier filter restriction to determine an amount of time remaining before the engine inlet barrier restriction will reach a specified loss limit according to features of embodiments described herein;
FIG. 8 illustrates an example processor-based system with which some aspects of the embodiments described herein can be implemented.

DETAILED DESCRIPTION

The following disclosure describes various illustrative embodiments and examples for implementing the features and functionality of the present disclosure. While particular components, arrangements, and/or features are described below in connection with various example embodiments, these are merely examples used to simplify the present disclosure and are not intended to be limiting. It will of course be appreciated that in the development of any actual embodiment, numerous implementation-specific decisions must be made to achieve the developer's specific goals, including compliance with system, business, and/or legal constraints, which may vary from one implementation to another. Moreover, it will be appreciated that, while such a development effort might be complex and time-consuming; it would nevertheless be a routine undertaking for those of ordinary skill in the art having the benefit of this disclosure.

In the specification, reference may be made to the spatial relationships between various components and to the spatial orientation of various aspects of components as depicted in the attached drawings. However, as will be recognized by those skilled in the art after a complete reading of the present disclosure, the devices, components, members, apparatuses, etc. described herein may be positioned in any desired orientation. Thus, the use of terms such as "above", "below", "upper", "lower", "top", "bottom", or other similar terms to describe a spatial relationship between various components or to describe the spatial orientation of aspects of such components, should be understood to describe a relative relationship between the components or a spatial orientation of aspects of such components, respectively, as the components described herein may be oriented in any desired direction. When used to describe a range of dimensions or other characteristics (e.g., time, pressure, temperature, length, width, etc.) of an element, operations, and/or conditions, the phrase "between X and Y" represents a range that includes X and Y.

Additionally, as referred to herein in this specification, the terms "forward," "aft," "inboard," and "outboard" may be used to describe relative relationship(s) between components and/or spatial orientation of aspect(s) of a component or components. The term "forward" may refer to a spatial direction that is closer to a front of an aircraft relative to another component or component aspect(s). The term "aft" may refer to a spatial direction that is closer to a rear of an aircraft relative to another component or component aspect(s). The term "inboard" may refer to a location of a component that is within the fuselage of an aircraft and/or a spatial direction that is closer to or along a centerline of the aircraft (wherein the centerline runs between the front and the rear of the aircraft) or other point of reference relative to another component or component aspect. The term "outboard" may refer to a location of a component that is outside the fuselage of an aircraft and/or a spatial direction that is farther from the centerline of the aircraft or other point of reference relative to another component or component aspect.

In some cases, the units of certain parameters, as used in the aircraft industry, may be denoted by abbreviations such as lbm/sec, which means "pounds mass per second," a unit for air flow through a defined area, where the lower case m denotes mass (not meters). In another example, the term "dP" stands for "differential pressure" and is expressed herein in pounds-per-square-inch (PSI).

Further, the present disclosure may repeat reference numerals and/or letters in the various examples. This repetition is for the purpose of simplicity and clarity and does not in itself dictate a relationship between the various embodiments and/or configurations discussed. Example embodiments that may be used to implement the features and functionality of this disclosure will now be described with more particular reference to the accompanying figures.

In an advance in the state of the art, embodiments described herein present a continuous, real-time air inlet barrier filter "health" or condition monitor system and method that operates irrespective of mass airflow into the engine or the power setting of the engine and indicates the percentage amount of restriction of the filter as it becomes clogged during use. An indicator gives the pilot advance warning that the inlet barrier filter is clogged. Instead of merely generating an alarm or message under a single, predetermined condition, example embodiments are responsive to actual operating conditions because it is based on the relationship that differential pressure dP increases as a function of mass air flow (squared) into the engine. That is, the health or condition monitor is sensitive to the component variables of the mass air flow inlet to the engine, which in turn are affected by the varying levels of filter restriction. Thus, the filter monitor is responsive to and reflects the effects of atmospheric variables such as temperature and pressure, the airspeed of the rotorcraft, the speeds of the compressor and power turbine shafts, and any impediment offered by restriction of the filter itself.

Embodiments herein are described in the context of a rotorcraft powered by a turboshaft engine. The description illustrates the concepts implemented in various example embodiments but should not be considered as limiting of the scope of the disclosure. For example, the concept described herein for inlet barrier filters for a turboshaft engine as used in rotorcraft has wide applicability to engines that operate on air and fuel mixtures, wherein the air intake limits the air inlet to the engine to air that has been filtered by a filter element placed in the air inlet path.

For example, embodiments described herein are well-suited for systems operable according to programmed instructions implemented in software, for example, and which may include instrument panel apparatus for the display of operational characteristics and data, are well-adapted to the uses of the concepts described herein.

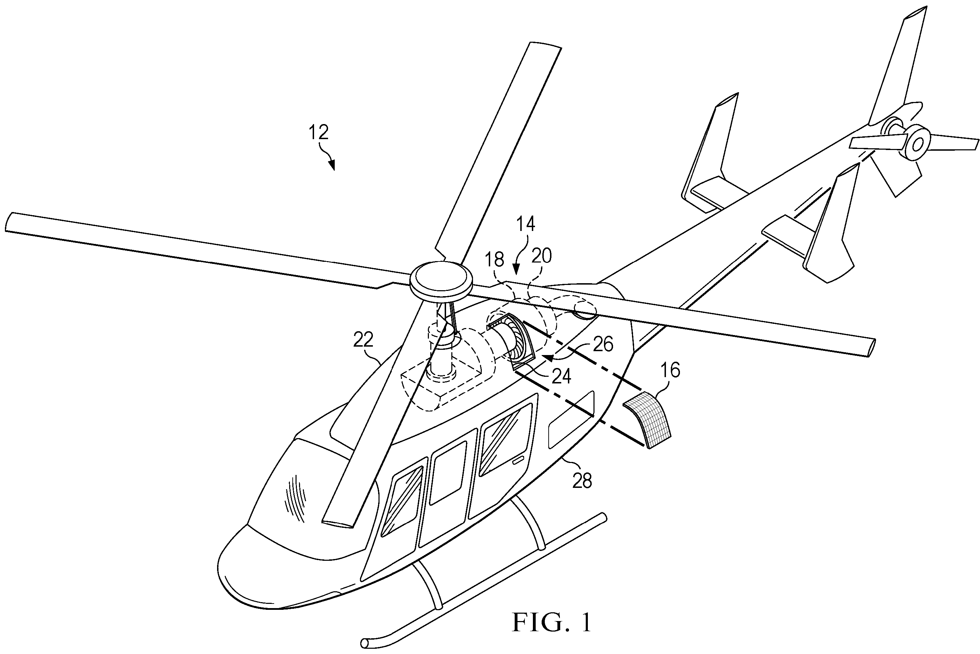

FIG. 1 is a simplified illustration of an example rotorcraft 12 equipped with a turboshaft engine 14 (shown partially in phantom), and an inlet barrier filter 16 according to particular embodiments described herein. The turboshaft engine 14 includes a gas generator section 18 and a power turbine section 20. The power turbine section 20 may be coupled through a power transmission section to a rotor drive typically located in the upper portion of the rotorcraft 12 under a cowling 22 and behind the cockpit. The air inlet barrier filter 16 may be located in an opening 24 along the side of the turboshaft engine 14 in the path of the air inlet 26 to the gas generator section 18 of the turboshaft engine. In other embodiments, the air inlet barrier filter 16 may not be limited to a side-facing inlet. The air inlet filter 16 may be an assembly that may consist of a replaceable filter element and a supporting frame for installation in an opening in the fuselage 28 of the rotorcraft 12.

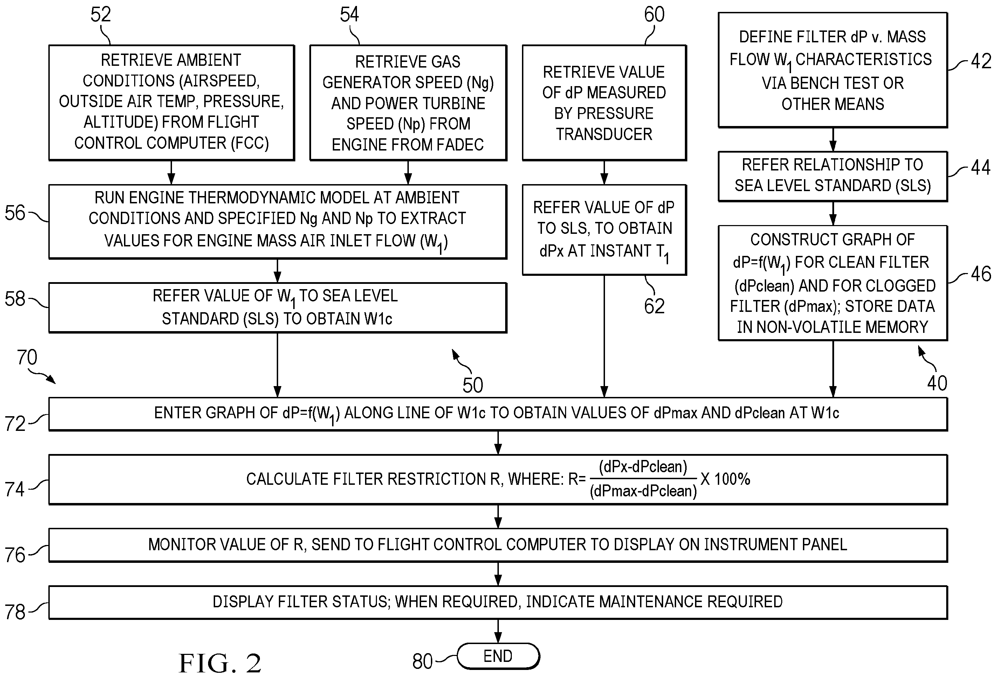

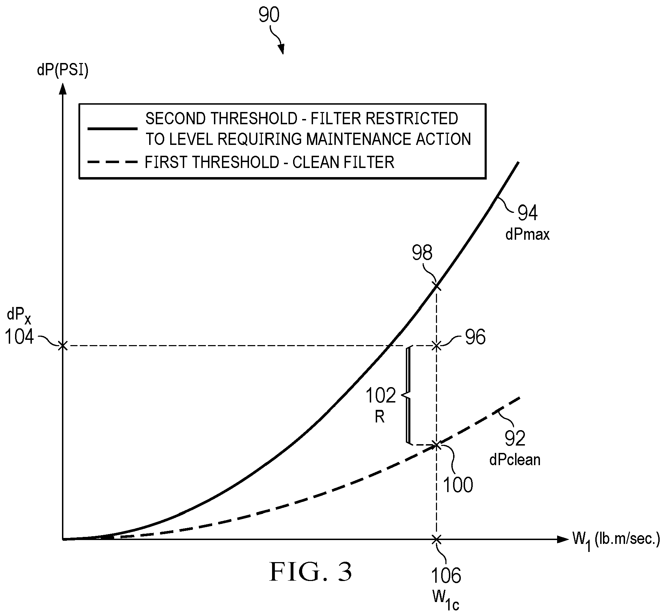

FIG. 2 illustrates a flow diagram of example operations performed in connection with a real-time engine inlet barrier filter condition monitor according to features of embodiments described herein. A first section 40 includes a process step 42 in which filter restriction characteristics, in terms of differential pressure (dP) or pressure drop as a function of the mass air flow (W1) of air inlet to a turboshaft engine, such as engine 14, are defined. In process step 44, the values of dP and W1 may be corrected to sea level standard (SLS) ambient values, to obtain from those values dPc and W1c, respectively, as will be described. Referring now also to FIG. 3, the first section 40 also includes a process step 46 in which a graphical plot 90 of first and second characteristic curves for dP (in PSI, pounds per square inch) versus W1 (in lbm/sec, pounds mass per second) for both a clean filter, designated dPclean 92, and the same having the maximum allowable restriction, designated dPmax 94, is constructed. As used herein, maximum allowable restriction means that the filter (e.g., inlet air filter 16) is 100% restricted and requires maintenance (cleaning or replacement, for example) before further operation of the rotorcraft 12. It will be noted that the characteristic curves 92 and 94 are exponential, as the differential pressure dPc increases as the square of mass air flow W1c. The characteristic curves 92 and 94 may be used to obtain threshold values for dPclean and dPmax at a given instant value of W1c taken at a time T1, so that the percentage restriction R of the filter can be calculated at that time T1 and used to develop an indication of the condition or "health" of the inlet barrier air filter 16.

Continuing to refer to FIG. 3, in the graph 90, a region between the first curve 92 and the second curve 94 corresponds to an operating range; i.e., the allowable amount of restriction of the inlet barrier filter 16 for operating the rotorcraft 12. The use of characteristic curves 92 and 94 for implementing aspects of embodiments described herein will be described herein below.

Referring again to FIG. 2, a second section 50 of the flow diagram illustrated therein includes a sequence of process steps 52 through 62 for determining values for parameters W1c and dPx to be used for selecting the values of dPc in calculating the percentage restriction R of the filter 16 at the instant in time the value of W1c is determined. W1c is a function of ambient conditions and gas generator 18 and power turbine 20 speeds, as applied to an engine thermodynamic model for the particular engine 14 used in the rotorcraft 12. As will be described in greater detail below, ambient conditions, including but not limited to airspeed in knots of the rotorcraft 12 and ambient temperature (degrees Kelvin) and pressure altitude, in feet, determined from atmospheric pressure ($lb/in^2$ or PSIamb), may be obtained from a flight control computer of the rotorcraft 12. The speed of the gas generator 18, which is equal to compressor shaft speed (Ng, RPM or %), and the speed of the power turbine 20, which is equal to output shaft speed (Np, RPM or %), of engine 14 may be obtained from a full authority digital engine control or FADEC of the rotorcraft 12. The FADEC is a unit which contains the software for controlling the engine 14 in the rotorcraft 12. The differential pressure, also called the pressure drop parameter dPx, may be read from a pressure transducer 30 located in the air inlet 24 of the turboshaft engine 14 on the rotorcraft 12 as shown in FIG. 1. As will be described in greater detail below, the values of W1 and dPx may be corrected to W1c and dPc, respectively, before they are referred to the graph 90 of the second section 50 of the flow diagram of FIG. 2.

A third section 70 of the flow diagram illustrated in FIG. 2 includes a sequence of the process steps 72 through 78 for calculating a current amount of restriction R of the inlet barrier filter 16 at the moment the measurement of dP and the calculation of W1 are obtained from the pressure transducer 30 and the flight control computer of the rotorcraft. The percentage amount of restriction R is calculated using the formula:

$$R = (dPx - dPclean)/(dPmax - dPclean) \times 100\%$$

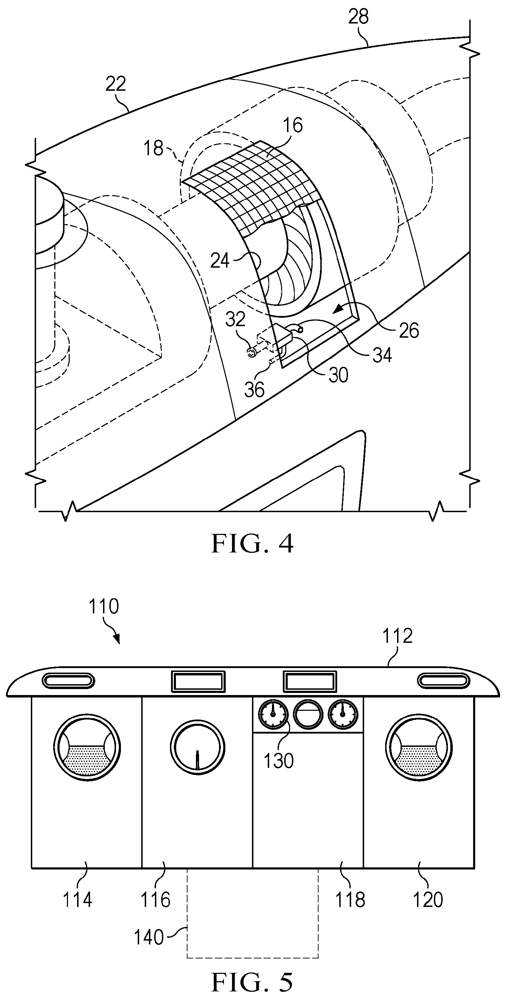

where dPx is the value of dP output from the pressure transducer 30, corrected for SLS. The values of dPclean and dPmax are read from the characteristic curves 92 and 94, respectively, where they are intersected by a vertical line extending upward from the value 106 of W1c provided by the process depicted in the second section 50 of the flow diagram shown in FIG. 3. In the last process step of the third section 70, a "maintenance needed" indication may be provided to a display on a cockpit instrument panel of the rotorcraft 12, as shown in FIG. 5, to alert the pilot that the inlet barrier filter 16 needs to be cleaned or replaced. The threshold corresponding to the percentage value R determined from the calculation described above may in some applications be adjusted so that the indication is presented at some percentage value less than 100% to provide some margin to allow the rotorcraft 12 to proceed to its destination to receive the required maintenance.

The process steps of sections 40, 50 and 70 of the flow diagram shown in FIG. 2, which may be performed in the flight control computer of the rotorcraft 12, begin with process steps 52 and 54. In process step 52, data for ambient conditions (airspeed in knots, outside air temperature in degrees Centigrade converted to degrees Kelvin, and pressure altitude in feet) are retrieved (e.g., from internal registers) by the flight control computer and input to process step 56. In process step 54, data for gas generator speed (Ng) and power turbine speed (Np) are retrieved from the FADEC and input to process step 56. The software in the flight control computer may then run an engine thermodynamic model at the measured ambient conditions from process steps 52 and 54 to extract values for the engine mass air inlet flow W1. In process step 58, the value of W1 is corrected to sea level standard (SLS) to yield the corrected value W1c. In process step 62, the measured value of dP is received from the pressure transducer 30 and referred to SLS to obtain the value of dPx at the same instant T1 corresponding to the corrected value W1c.

Continuing to refer to FIG. 2, the values of dPmax and dPclean are read in process step 72 from the intersection of dPx and W1c with the characteristic curves 92 and 94 to enable calculation of the value of R using the instant values of dPx, dPmax, and dPclean in process step 74 at the instant T1. As shown in FIG. 3, the value of R (denoted by reference number 102) is proportional to the distance between reference numbers 96 and 100 divided by the distance between reference numbers 98 and 100. In process step 76 the value of R is monitored and forwarded to a display to interface (not shown) in the flight control computer for display in process step 78 on an indicator on the instrument panel inside the rotorcraft 12. The indicator may display the percentage value of R as calculated and may also display a message such as maintenance required.

Although the process steps, or operations, shown in and described with reference to FIG. 2 are illustrated as occurring once each and in a particular order, it will be recognized that the operations may be performed in any suitable order and repeated as desired. Additionally, one or more operations may be performed in parallel. Furthermore, the operations illustrated in FIG. 2 may be combined or may include more or fewer details than described.

FIG. 3 is a graphical representation 90 relating differential pressure dP to mass inlet air flow W1 through an inlet barrier filter 16 as used in the embodiment of FIGS. 1 and 2. The characteristic curves 92 and 94 respectively represent the exponential functions of the relationships of dPclean and dPmax with respect to the mass air inlet flow W1 over a range of values of W1 as the rotorcraft 12 is operated. The differential pressure dPx is measured by the pressure transducer 30 (see FIG. 4) and the value of W1c is calculated as described in the process depicted in FIG. 2. In the process described, these variables are determined at each instant of time T1 during operation of the aircraft, thereby providing a real time indicator to the pilot of the status of the inlet barrier filter 16. The characteristic curves 92 and 94 shown on the graphical representation 90 of FIG. 3 depict the relationships of the independent and dependent variables involved in the processes, well understood by persons skilled in the art, that are carried out in the flight control computer on board the aircraft and operating according to programmed instructions.

FIG. 4 is an enlarged view of a portion of FIG. 1 showing the air inlet opening 24 in the cowling 22 of the fuselage 28 that covers the turboshaft engine 14 of the rotorcraft 12. The opening includes the air inlet 24 leading to the inlet side of the gas generator 18 portion of the turboshaft engine 14. Just inside the opening 24 adjacent the position of the air inlet barrier filter 16 (FIG. 1) is a simplified depiction of the differential pressure transducer 30. The transducer includes at least two sensing inputs, a first one 32 to sense the ambient pressure outside the rotorcraft near where air enters the filter 16, and a second one 34 to sense the air pressure proximate the outlet side of the filter 16 inside the cowling 22. The measurements preferably occur simultaneously at a given time T1 to provide the difference in air pressure at the two locations-the differential pressure dPx. An electrical signal representing the differential pressure dPx may be conducted along a wiring harness 36 to the flight control computer in the rotorcraft 12.

FIG. 5 is an illustration of an instrument panel 110 that may be implemented in the rotorcraft 12 depicted in FIG. 1. A narrow panel section 112 extending across the upper portion of the panel 110 may be organized as a single section or a split, dual section for convenient observation and use by a pilot and copilot. In a typical rotorcraft 12, the panel 110 may further include separate but similar sections 114 and 120 containing similar instruments, again for use by pilot and copilot. In the illustrated example, additional sections 116 and 118 may be located between the outer sections 114 and 120. As depicted in FIG. 5, an indicator 130 may be positioned on the panel 110 in the upper portion of the section 118. The indicator 130, which may be calibrated in a scale from zero to 100% and, for example, take the form of a round gauge as shown or a bar graph indicator, may be provided to display the inlet barrier filter percentage restriction R. Additionally and/or alternatively, the indicator may provide a text message alerting the pilot that maintenance is required or providing other information, as described below. Alternatively, the indicator 130 may be positioned elsewhere according to the particular cockpit design. Indicator 130 may comprise multiple indicators, each of which may provide information in one or multiple forms (e.g., text, graphics, etc.). In a typical instrument panel configuration, the panel 110 may be positioned just above a pedestal 140 represented by the dashed line that includes other operating controls and indicators of the aircraft.

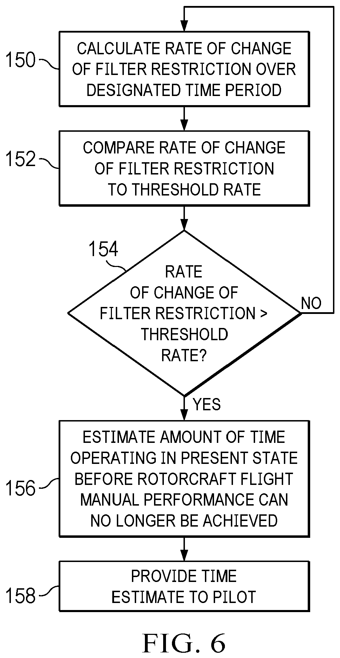

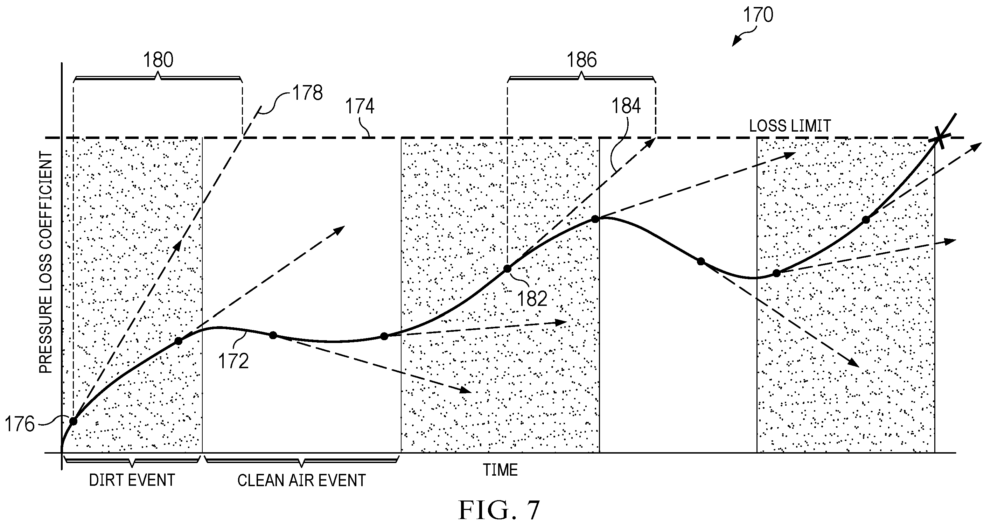

FIG. 6 illustrates a flow diagram showing additional example operations performed in connection with a real-time engine inlet barrier filter condition monitor according to features of embodiments described herein. In process step 150, a rate of change of filter restriction R (e.g., as determined in process step 74 (FIG. 2) is calculated over a designated time period. As will be described in greater detail hereinbelow with reference to FIG. 7, the rate at which R changes is indicative of whether the condition of the filter 16 is improving (as indicated by a negative rate of change) or worsening (as indicated by a positive rate of change) at the particular moment in time. For example, if the rotorcraft 12 is operating in a brown out situation for an extended period of time, the condition of the filter 16 (i.e., the amount of restriction or clogging thereof) will worsen at a faster rate than if the rotorcraft 12 is operating under relatively normal conditions, in which some restriction may occur but it will take longer for the filter to reach the same restricted condition as in the first situation.

In process step 152, the rate of change of filter restriction calculated in process step 150 is compared to a threshold rate. For example, in some embodiments, the threshold rate may be in the range of approximately 10-20% per minute; however, it will be recognized that other values may be used in different operational scenarios and for different embodiments of the filter 16.

In process step 154, a determination is made whether the rate of change of filter restriction calculated in process step 150 exceeds the threshold rate. If not, meaning that the condition of the filter is not deteriorating at a concerning rate, execution returns to process step 150. If in process step 154 it is determined that the rate of change of filter restriction calculated in process step 150 does exceed the threshold rate, meaning that the condition of the filter is deteriorating at a concerning rate, execution proceeds to process step 156. It will be recognized that the data may be filtered at any step using an appropriate method to prevent a false and/or premature positive determination in process step 154.

In process step 156, the rate of change of filter restriction calculated in process step 150 may be used to determine how much time is remaining in the current operational environment of the rotorcraft 12 until the filter restriction reaches a maximum allowable rate (e.g., 100%). For example, the rate of change of filter restriction may be extrapolated using one of a variety of extrapolation methods, including but not limited to linear extrapolation and/or Bayesian extrapolation using historic filter operational information.

In process step 158, the time estimate determined in process step 156 may be communicated to the pilot, e.g., using one or more appropriate indicators on the panel 110.

Although the process steps, or operations, shown in and described with reference to FIG. 6 are illustrated as occurring once each and in a particular order, it will be recognized that the operations may be performed in any suitable order and repeated as desired. Additionally, one or more operations may be performed in parallel. Furthermore, the operations illustrated in FIG. 6 may be combined or may include more or fewer details than described.

For example, in an alternative embodiment, the operations of process steps 156 and 158 may be performed regardless of whether a negative or positive determination is made in process step 154, such that the pilot may remain apprised of the time estimate at all times during operation. In this embodiment, a positive determination in process step 154 would result in an additional visual and/or audio alert being provided to the pilot in process step 158, thereby ensuring that the pilot does not overlook the time estimate information in a critical situation.

Additionally and/or alternatively, process steps 156 and 158 may be replaced by a process step in which a message is provided to the pilot indicating that an excessive rate of filter clogging has been detected (i.e., without estimating an amount of time before flight manual performance can no longer be achieved).

FIG. 7 shows a graph 170 illustrating how a rate of change of an engine inlet barrier filter restriction over time, represented by a line 172, may be extrapolated to determine an amount of time remaining before the engine inlet barrier restriction will reach a specified loss limit (e.g., maximum restriction), represented by a line 174, according to features of embodiments described herein. It will be recognized from the illustrated example that different operating conditions affect the level of filter restriction, with dirt events resulting in increased restriction (corresponding to an increase in pressure loss coefficient over time) and clean air events resulting in reduction of filter restriction (corresponding to a decrease in pressure loss coefficient over time). As used herein, the pressure loss coefficient is a loss normalization function across flight conditions, such as power demand, airspeed, altitude, etc., such that the level of filter clogging can be more accurately determined for extrapolative analysis.

As shown in FIG. 7, extrapolation of a rate of change of the engine inlet barrier restriction 172 at a point 176 is represented by a dashed line 178. A bracket 180 represents an estimated amount of time remaining before the loss limit 174 is reached if the rotorcraft 12 continues to operate under current operating conditions. Similarly, extrapolation of a rate of change of the engine inlet barrier restriction 172 at a point 182 is represented by a dashed line 184. A bracket 186 represents an estimated amount of time remaining before the loss limit 174 is reached if the rotorcraft 12 continues to operate under current operating conditions.

The foregoing detailed description is shown and described in only one of its forms-with a turboshaft engine for powering a rotorcraft for example-to illustrate the concept of the invention. Persons skilled in the art will understand that this concept is susceptible of various changes and modifications and may be implemented or adapted readily to other types of engines that require air mixed with fuel for operation and provide for filtering the air conducted into the engine. Further, the invention is not limited to use with turboshaft engines or to engines used in rotorcraft. Other types of internal combustion engines and other types of motorized vehicles are suitable candidates for the use of this invention, including engines that operate on compressed air or forced air induction.

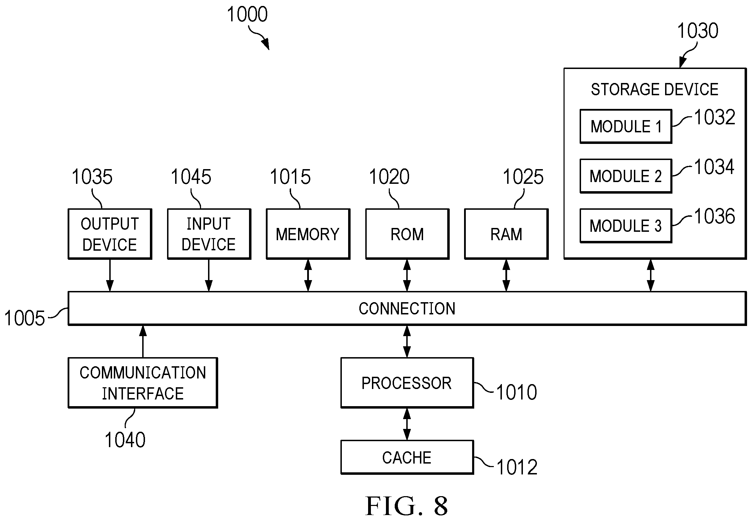

FIG. 8 illustrates an example processor-based system with which some aspects of embodiments described herein can be implemented. For example, processor-based system 1000 can be any computing device making up, or any component thereof in which the components of the system are in communication with each other using connection 1005. In particular embodiments, system 1000 may comprise all or part of flight control computer and/or FADEC of the rotorcraft 12. Connection 1005 can be a physical connection via a bus, or a direct connection into processor 1010, such as in a chipset architecture. Connection 1005 can also be a virtual connection, networked connection, or logical connection.

In some embodiments, computing system 1000 is a distributed system in which the functions described in this disclosure can be distributed within a datacenter, multiple data centers, a peer network, etc. In some embodiments, one or more of the described system components represents many such components each performing some or all of the function for which the component is described. In some embodiments, the components can be physical or virtual devices.

Example system 1000 includes at least one processing unit (Central Processing Unit (CPU) or processor) 1010 and connection 1005 that couples various system components including system memory 1015, such as Read-Only Memory (ROM) 1020 and Random-Access Memory (RAM) 1025 to processor 1010. Computing system 1000 can include a cache of highspeed memory 1012 connected directly with, in close proximity to, or integrated as part of processor 1010.

Processor 1010 can include any general purpose processor and a hardware service or software service, such as services 1032, 1034, and 1036 stored in storage device 1030, configured to control processor 1010 as well as a special purpose processor where software instructions are incorporated into the actual processor design. One or more of services 1032, 1034, and 1036 may be involved in implementing one or more operations shown and described herein. Processor 1010 may essentially be a completely self-contained computing system, containing multiple cores or processors, a bus, memory controller, cache, etc. A multi-core processor may be symmetric or asymmetric.

To enable user interaction, computing system 1000 includes an input device 1045, which can represent any number of input mechanisms, such as a microphone for speech, a touch-sensitive screen for gesture or graphical input, keyboard, mouse, motion input, speech, etc.

Computing system 1000 can also include output device 1035, which can be one or more of a number of output mechanisms known to those of skill in the art. In some instances, multimodal systems can enable a user to provide multiple types of input/output to communicate with computing system 1000. Computing system 1000 can include communications interface 1040, which can generally govern and manage the user input and system output. The communication interface may perform or facilitate receipt and/or transmission wired or wireless communications via wired and/or wireless transceivers, including those making use of an audio jack/plug, a microphone jack/plug, a USB port/plug, an Apple® Lightning® port/plug, an Ethernet port/plug, a fiber optic port/plug, a proprietary wired port/plug, a Bluetooth® wireless signal transfer, a Bluetooth® low energy (BLE) wireless signal transfer, an IBEACON® wireless signal transfer, a Radio-Frequency Identification (RFID) wireless signal transfer, Near-Field Communications (NFC) wireless signal transfer, Dedicated Short Range Communication (DSRC) wireless signal transfer, 802.11 Wi-Fi® wireless signal transfer, W1AN signal transfer, Visible Light Communication (VLC) signal transfer, Worldwide Interoperability for Microwave Access (WiMAX), Infrared (IR) communication wireless signal transfer, Public Switched Telephone Network (PSTN) signal transfer, Integrated Services Digital Network (ISDN) signal transfer, 3G/4G/5G/LTE cellular data network wireless signal transfer, ad-hoc network signal transfer, radio wave signal transfer, microwave signal transfer, infrared signal transfer, visible light signal transfer signal transfer, ultraviolet light signal transfer, wireless signal transfer along the electromagnetic spectrum, or some combination thereof.

Communication interface 1040 may also include one or more GNSS receivers or transceivers that are used to determine a location of the computing system 1000 based on receipt of one or more signals from one or more satellites associated with one or more GNSS systems. GNSS systems include, but are not limited to, the US-based GPS, the Russia-based Global Navigation Satellite System (GLONASS), the China-based BeiDou Navigation Satellite System (BDS), and the Europe-based Galileo GNSS. There is no restriction on operating on any particular hardware arrangement, and therefore the basic features here may easily be substituted for improved hardware or firmware arrangements as they are developed.

Storage device 1030 can be a non-volatile and/or non-transitory and/or computer-readable memory device and can be a hard disk or other types of computer-readable media which can store data that are accessible by a computer, such as magnetic cassettes, flash memory cards, solid state memory devices, digital versatile disks, cartridges, a floppy disk, a flexible disk, a hard disk, magnetic tape, a magnetic strip/stripe, any other magnetic storage medium, flash memory, memristor memory, any other solid state memory, a Compact Disc Read-Only Memory (CD-ROM) optical disc, a rewritable CD optical disc, a Digital Video Disk (DVD) optical disc, a Blu-ray Disc (BD) optical disc, a holographic optical disk, another optical medium, a Secure Digital (SD) card, a micro SD (microSD) card, a Memory Stick® card, a smartcard chip, a EMV chip, a Subscriber Identity Module (SIM) card, a mini/micro/nano/pico SIM card, another Integrated Circuit (IC) chip/card, Random-Access Memory (RAM), Static RAM (SRAM), Dynamic RAM (DRAM), Read-Only Memory (ROM), Programmable ROM (PROM), Erasable PROM (EPROM), Electrically Erasable PROM (EEPROM), flash EPROM (FLASHEPROM), cache memory (L1/L2/L3/L4/L5/L#), Resistive RAM (RRAM/ReRAM), Phase Change Memory (PCM), Spin Transfer Torque RAM (STT-RAM), another memory chip or cartridge, and/or a combination thereof.

Storage device 1030 can include software services, servers, services, etc., that when the code that defines such software is executed by the processor 1010, it causes the system 1000 to perform a function. In some embodiments, a hardware service that performs a particular function can include the software component stored in a computer-readable medium in connection with the necessary hardware components, such as processor 1010, connection 1005, output device 1035, etc., to carry out the function.

Example 1 provides an aircraft including a turboshaft engine for powering the aircraft; an inlet barrier filter (IBF) for filtering air at an inlet through which the turboshaft engine draws inlet air; a differential pressure transducer for measuring a differential pressure across the IBF during operation of the aircraft; and a flight control computer system configured to, during operation of the aircraft: periodically calculate a restriction of an airflow through the IBF; periodically determine a rate of change of the restriction of the airflow; compare the rate of change to a threshold rate; and provide an alert to a pilot of the aircraft when the determined rate of change exceeds the threshold rate.

Example 2 provides the aircraft of example 1, in which the restriction of the airflow through the IBF is calculated as a function of the differential pressure measured by the differential pressure transducer and at least one characteristic differential pressure value.

Example 3 provides the aircraft of example 1 or 2, further including an instrument panel including an indicator configured to provide the alert.

Example 4 provides the aircraft of example 3, in which the indicator includes a gauge.

Example 5 provides the aircraft of example 3 or 4, in which the indicator includes a light element.

Example 6 provides the aircraft of any one of examples 1-5, in which the flight control computer system is further configured to estimate from the rate of change an amount of time the aircraft can continue to operate in current conditions before the restriction of the airflow reaches a maximum limit.

Example 7 provides the aircraft of any one of examples 1-6, further including an instrument panel including an indicator configured to present a text message including the estimated amount of time.

Example 8 provides the aircraft of any one of examples 1-7, in which the aircraft includes a rotorcraft.

Example 9 provides a system for monitoring a condition of an inlet barrier filter (IBF) for filtering air at an inlet through which a turboshaft engine for powering operation of an aircraft draws inlet air, the system including a differential pressure transducer configured to periodically take a measurement of a differential pressure across the IBF during operation of the aircraft; and a flight control computer system configured to, during operation of the aircraft: periodically calculate a restriction of an airflow through the IBF; periodically determine a rate of change of the restriction of the airflow; compare the rate of change to a threshold rate; and provide an alert to a pilot of the aircraft when the determined rate of change exceeds the threshold rate.

Example 10 provides the system of example 9, in which the restriction of the airflow through the IBF is calculated as a function of the differential pressure measured by the differential pressure transducer and at least one characteristic differential pressure value.

Example 11 provides the system of example 9 or 10, further including an indicator within a cockpit of the aircraft, the indicator configured to provide the alert.

Example 12 provides the system of example 11, in which the indicator includes a gauge.

Example 13 provides the system of example 11 or 12, in which the indicator includes a light element.

Example 14 provides the system of any one of examples 9-13, in which the flight control computer system is further configured to estimate from the rate of change an amount of time the aircraft can continue to operate in current conditions before the restriction of the airflow reaches a maximum limit.

Example 15 provides the system of example 14, further including an indicator within a cockpit of the aircraft, the indicator configured to present a text message including the estimated amount of time.

Example 16 provides one or more non-transitory computer-readable storage media including instructions for execution that, when executed by a processor, are operable to cause to be performed operations including periodically calculating a restriction of an airflow through an inlet barrier filter (IBF) for filtering air at an inlet through which a turboshaft engine for powering operation of an aircraft draws inlet air; periodically determining a rate of change of the restriction of the airflow; comparing the rate of change to a threshold rate; and providing an alert to a pilot of the aircraft when the determined rate of change exceeds the threshold rate.

Example 17 provides the one or more non-transitory computer-readable storage media of example 16, in which the restriction of the airflow through the IBF is calculated as a function of a differential pressure measured by a differential pressure transducer provided in the aircraft proximate the IBF and at least one characteristic differential pressure value.

Example 18 provides the one or more non-transitory computer-readable storage media of example 16 or 17, in which the operations further include causing the alert to be displayed on an indicator within a cockpit of the aircraft.

Example 19 provides the one or more non-transitory computer-readable storage media of example 18, in which the indicator includes at least one of a gauge or a light element.

Example 20 provides the one or more non-transitory computer-readable storage media of any one of examples 16-19, in which the operations further include estimating from the rate of change an amount of time the aircraft can continue to operate in current conditions before the restriction of the airflow reaches a maximum limit; and causing to be presented on an indicator provided in a cockpit of the aircraft a text message including the estimated amount of time.

At least one embodiment is disclosed, and variations, combinations, and/or modifications of the embodiment(s) and/or features of the embodiment(s) made by a person having ordinary skill in the art are within the scope of the disclosure. Alternative embodiments that result from combining, integrating, and/or omitting features of the embodiment(s) are also within the scope of the disclosure. Where numerical ranges or limitations are expressly stated, such express ranges or limitations should be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.). For example, whenever a numerical range with a lower limit, RI, and an upper limit, Ru, is disclosed, any number falling within the range is specifically disclosed. In particular, the following numbers within the range are specifically disclosed: R=RI +k * (Ru-RI), wherein k is a variable ranging from 1 percent to 100 percent with a 1 percent increment, i.e., k is 1 percent, 2 percent, 3 percent, 4 percent, 5 percent,...50 percent, 51 percent, 52 percent,..., 95 percent, 96 percent, 95 percent, 98 percent, 99 percent, or 100 percent. Moreover, any numerical range defined by two R numbers as defined in the above is also specifically disclosed. Use of the term "optionally" with respect to any element of a claim means that the element is required, or alternatively, the element is not required, both alternatives being within the scope of the claim. Use of broader terms such as comprises, includes, and having should be understood to provide support for narrower terms such as consisting of, consisting essentially of, and comprised substantially of. Accordingly, the scope of protection is not limited by the description set out above but is defined by the claims that follow, that scope including all equivalents of the subject matter of the claims. Each and every claim is incorporated as further disclosure into the specification and the claims are embodiment(s) of the present disclosure. Also, the phrases "at least one of A, B, and C" and "A and/or B and/or C" should each be interpreted to include only A, only B, only C, or any combination of A, B, and C. The terms "substantially," "close," "approximately," "near," and "about," generally refer to being within +/- 5-20% of a target value based on the context of a particular value as described herein or as known in the art. Similarly, terms indicating orientation of various elements, e.g., "coplanar," "perpendicular," "orthogonal," "parallel," or any other angle between the elements, generally refer to being within +/- 5-20% of a target value based on the context of a particular value as described herein or as known in the art.

The diagrams in the FIGURES illustrate the architecture, functionality, and/or operation of possible implementations of various embodiments of the present disclosure. Although several embodiments have been illustrated and described in detail, numerous other changes, substitutions, variations, alterations, and/or modifications are possible without departing from the spirit and scope of the present disclosure, as defined by the appended claims. The particular embodiments described herein are illustrative only and may be modified and practiced in different but equivalent manners, as would be apparent to those of ordinary skill in the art having the benefit of the teachings herein. Those of ordinary skill in the art would appreciate that the present disclosure may be readily used as a basis for designing or modifying other embodiments for carrying out the same purposes and/or achieving the same advantages of the embodiments introduced herein. For example, certain embodiments may be implemented using more, less, and/or other components than those described herein. Moreover, in certain embodiments, some components may be implemented separately, consolidated into one or more integrated components, and/or omitted. Similarly, methods associated with certain embodiments may be implemented using more, less, and/or other steps than those described herein, and their steps may be performed in any suitable order.

Numerous other changes, substitutions, variations, alterations, and modifications may be ascertained to one of ordinary skill in the art and it is intended that the present disclosure encompass all such changes, substitutions, variations, alterations, and modifications as falling within the scope of the appended claims.

One or more advantages mentioned herein do not in any way suggest that any one of the embodiments described herein necessarily provides all the described advantages or that all the embodiments of the present disclosure necessarily provide any one of the described advantages. Note that in this specification, references to various features included in "one embodiment", "example embodiment", "an embodiment", "another embodiment", "certain embodiments", "some embodiments", "various embodiments", "other embodiments", "alternative embodiment", and the like are intended to mean that any such features are included in one or more embodiments of the present disclosure but may or may not necessarily be combined in the same embodiments.

As used herein, unless expressly stated to the contrary, use of the phrase "at least one of," "one or more of" and "and/or" are open ended expressions that are both conjunctive and disjunctive in operation for any combination of named elements, conditions, or activities. For example, each of the expressions "at least one of X, Y and Z," "at least one X, Y or Z", "one or more of X, Y and Z", "one or more of X, Y or Z" and "A, B or C" can mean any of the following: 1) X, but not Y and not Z; 2) Y, but not X and not Z; 3) Z, but not X and not Y; 4) X and Y, but not Z; 5) X and Z, but not Y; 6) Y and Z, but not X; or 7) X, Y, and Z. Additionally, unless expressly stated to the contrary, the terms "first," "second," "third," etc., are intended to distinguish the nouns (e.g., blade, rotor, element, device, condition, module, activity, operation, etc.) they modify. Unless expressly stated to the contrary, the use of these terms is not intended to indicate any type of order, rank, importance, temporal sequence, or hierarchy of the modified noun. For example, "first X" and "second X" are intended to designate two X elements that are not necessarily limited by any order, rank, importance, temporal sequence, or hierarchy of the two elements. As referred to herein, "at least one of," "one or more of," and the like can be represented using the "(s)" nomenclature (e.g., one or more element(s)).

In order to assist the United States Patent and Trademark Office (USPTO) and, additionally, any readers of any patent issued on this application in interpreting the claims appended hereto, Applicant wishes to note that the Applicant: (a) does not intend any of the appended claims to invoke paragraph (f) of 35 U.S.C. Section 112 as it exists on the date of the filing hereof unless the words "means for" or "step for" are specifically used in the particular claims; and (b) does not intend, by any statement in the specification, to limit this disclosure in any way that is not otherwise reflected in the appended claims.

**Claims**

1. An aircraft (12) comprising:

   a turboshaft engine (14) for powering the aircraft (12);
   an inlet barrier filter (16), IBF, for filtering air at an inlet (26) through which the turboshaft engine (14) draws inlet air;
   a differential pressure transducer (30) for measuring a differential pressure across the IBF (16) during operation of the aircraft (12); and
   a flight control computer system configured to, during operation of the aircraft (12):

      periodically calculate a restriction of an airflow through the IBF (16);
      periodically determine a rate of change of the restriction of the airflow;
      compare the rate of change to a threshold rate; and
      provide an alert to a pilot of the aircraft (12) when the determined rate of change exceeds the threshold rate.

2. A system for monitoring a condition of an inlet barrier filter, IBF (16), for filtering air at an inlet (26) through which a turboshaft engine (14) for powering operation of an aircraft (12) draws inlet air, the system comprising:

   a differential pressure transducer (30) configured to periodically take a measurement of a differential pressure across the IBF (16) during operation of the aircraft (12); and
   a flight control computer system configured to, during operation of the aircraft (12):

      periodically calculate a restriction of an airflow through the IBF (16);
      periodically determine a rate of change of the restriction of the airflow;
      compare the rate of change to a threshold rate; and
      provide an alert to a pilot of the aircraft (12) when the determined rate of change exceeds the threshold rate.

3. The aircraft (12) of claim 1, or the system of claim 2, wherein the restriction of the airflow through the IBF (16) is calculated as a function of the differential pressure measured by the differential pressure transducer (30) and at least one characteristic differential pressure value.

4. The aircraft (12) of claim 1 or claim 3, further comprising an instrument panel (110) including an indicator (130) configured to provide the alert.

5. The system of claim 2 or claim 3, further comprising an indicator (130) within a cockpit of the aircraft (12), the indicator (130) configured to provide the alert.

6. The aircraft (12) of claim 4, or the system of claim 5, wherein the indicator (130) comprises a gauge.

7. The aircraft (12) of claim 4 or claim 6, or the system of claim 5 or claim 6, wherein the indicator (130) comprises a light element.

8. The aircraft (12) of any preceding aircraft claim, or the system of any preceding system claim, wherein the flight control computer system is further configured to estimate from the rate of change an amount of time the aircraft (12) can continue to operate in current conditions before the restriction of the airflow reaches a maximum limit.

9. The aircraft (12) of claim 8, further comprising an instrument panel including an indicator (130) configured to present a text message including the estimated amount of time.

10. The system of claim 8, further comprising an indicator (130) within a cockpit of the aircraft (12), the indicator (130) configured to present a text message including the estimated amount of time.

11. The aircraft (12) of any preceding aircraft claim, wherein the aircraft (12) comprises a rotorcraft.

12. One or more non-transitory computer-readable storage media comprising instructions for execution that, when executed by a processor, are operable to cause to be performed operations comprising:

   periodically calculating a restriction of an airflow through an inlet barrier filter, IBF (16), for filtering air at an inlet (26) through which a turboshaft engine (14) for powering operation of an aircraft (12) draws inlet air;
   periodically determining a rate of change of the restriction of the airflow;
   comparing the rate of change to a threshold rate; and
   providing an alert to a pilot of the aircraft (12) when the determined rate of change exceeds the threshold rate.

13. The one or more non-transitory computer-readable storage media of claim 12, wherein the restriction of the airflow through the IBF (16) is calculated as a function of a differential pressure measured by a differential pressure transducer (30) provided in the aircraft (12) proximate the IBF (16) and at least one characteristic differential pressure value.

14. The one or more non-transitory computer-readable storage media of claim 12 or claim 13, wherein the operations further comprise causing the alert to be displayed on an indicator (130) within a cockpit of the aircraft (12), optionally wherein the indicator (130) comprises at least one of a gauge or a light element.

15. The one or more non-transitory computer-readable storage media of any of claims 12 to 14, wherein the operations further comprise:

   estimating from the rate of change an amount of time the aircraft (12) can continue to operate in current conditions before the restriction of the airflow reaches a maximum limit; and
   causing to be presented on an indicator (130) provided in a cockpit of the aircraft (12) a text message including the estimated amount of time.

FIG. 1

**52** → RETRIEVE AMBIENT CONDITIONS (AIRSPEED, OUTSIDE AIR TEMP, PRESSURE, ALTITUDE) FROM FLIGHT CONTROL COMPUTER (FCC)

**54** → RETRIEVE GAS GENERATOR SPEED (Ng) AND POWER TURBINE SPEED (Np) FROM ENGINE FROM FADEC

**60** → RETRIEVE VALUE OF dP MEASURED BY PRESSURE TRANSDUCER

DEFINE FILTER dP v. MASS FLOW $W_1$ CHARACTERISTICS VIA BENCH TEST OR OTHER MEANS — **42**

**56** — RUN ENGINE THERMODYNAMIC MODEL AT AMBIENT CONDITIONS AND SPECIFIED Ng AND Np TO EXTRACT VALUES FOR ENGINE MASS AIR INLET FLOW ($W_1$)

REFER VALUE OF dP TO SLS, TO OBTAIN dPx AT INSTANT $T_1$

REFER RELATIONSHIP TO SEA LEVEL STANDARD (SLS) — **44**

**58** — REFER VALUE OF $W_1$ TO SEA LEVEL STANDARD (SLS) TO OBTAIN W1c

**62**

CONSTRUCT GRAPH OF $dP = f(W_1)$ FOR CLEAN FILTER (dPclean) AND FOR CLOGGED FILTER (dPmax); STORE DATA IN NON-VOLATILE MEMORY — **46**

**40**

**70** **50**

**72** — ENTER GRAPH OF $dP = f(W_1)$ ALONG LINE OF W1c TO OBTAIN VALUES OF dPmax AND dPclean AT W1c

**74** — CALCULATE FILTER RESTRICTION R, WHERE: $R = \dfrac{(dPx - dPclean)}{(dPmax - dPclean)} \times 100\%$

**76** — MONITOR VALUE OF R, SEND TO FLIGHT CONTROL COMPUTER TO DISPLAY ON INSTRUMENT PANEL

**78** — DISPLAY FILTER STATUS; WHEN REQUIRED, INDICATE MAINTENANCE REQUIRED

**80** — ( END )

FIG. 2

FIG. 3

EP 4 717 896 A1

28

22

18

16

24

32

36

30

34

26

**FIG. 4**

110

112

114    116    118    120

130

140

**FIG. 5**

150 — CALCULATE RATE OF CHANGE OF FILTER RESTRICTION OVER DESIGNATED TIME PERIOD

152 — COMPARE RATE OF CHANGE OF FILTER RESTRICTION TO THRESHOLD RATE

154 — RATE OF CHANGE OF FILTER RESTRICTION > THRESHOLD RATE?

NO

YES

156 — ESTIMATE AMOUNT OF TIME OPERATING IN PRESENT STATE BEFORE ROTORCRAFT FLIGHT MANUAL PERFORMANCE CAN NO LONGER BE ACHIEVED

158 — PROVIDE TIME ESTIMATE TO PILOT

FIG. 6

FIG. 7

FIG. 8

EP 4 717 896 A1

Europäisches
Patentamt

European
Patent Office

Office européen
des brevets

**EUROPEAN SEARCH REPORT**

**Application Number**

**EP 25 19 1167**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 790 102 A (NANJING RUIHUA POWER TECH CO LTD) 14 December 2021 (2021-12-14) * the whole document * * see machine translation [0025, [0028] * ----- | 1-15 | INV. F02C7/052 |
| X | FR 3 054 605 A1 (GE ENERGY PRODUCTS FRANCE SNC [FR]) 2 February 2018 (2018-02-02) * page 1, line 4 - line 12 * * page 4, line 9 - line 10 * * page 11, line 11 - line 20 * * pages 1, 3 * ----- | 1-7, 11-14 | |
| X | US 2019/112981 A1 (BERGAMI GAETANO [IT]) 18 April 2019 (2019-04-18) * paragraph [0030] - paragraph [0031] * * paragraph [0040] * * figures 1, 2 * ----- | 1-7, 11-14 | |
| A | US 11 713 692 B2 (TEXTRON INNOVATIONS INC [US]) 1 August 2023 (2023-08-01) * figures 1-3 * ----- | 1-15 | TECHNICAL FIELDS SEARCHED (IPC) F02C B01D B64D |

The present search report has been drawn up for all claims

| Place of search | Date of completion of the search | Examiner |
|---|---|---|
| The Hague | 8 January 2026 | Mihé, Julian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 19 1167

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2026

| Patent document cited in search report | | Publication date | Patent family member(s) | | Publication date |
|---|---|---|---|---|---|
| CN 113790102 | A | 14-12-2021 | NONE | | |
| FR 3054605 | A1 | 02-02-2018 | NONE | | |
| US 2019112981 | A1 | 18-04-2019 | EP 3473843 A1 | | 24-04-2019 |
| | | | US 2019112981 A1 | | 18-04-2019 |
| US 11713692 | B2 | 01-08-2023 | NONE | | |

For more details about this annex : see Official Journal of the European Patent Office, No. 12/82